# EUROPEAN PATENT APPLICATION

(11) **EP 4 738 184 A1**
(43) Date of publication of application: **06.05.2026**
(21) Application number: 25209669.8
(22) Date of filing: 20.10.2025
(51) Int. Cl.: G06F 40/58

(54) **SYSTEM AND METHOD FOR SIMULTANEOUS TRANSLATION IN GUIDED TOURS**

(30) Priority: 28.10.2024 IT 202400024039
(71) Applicant: Vox S.p.A., 06128 Perugia (IT)
(72) Inventor: PRIMERANO, Fabio, 06128 PERUGIA (IT)
(74) Representative: Tiburzi, Andrea

(57) **Abstract**

The present invention relates to an audio signal transmission system (100), comprising a plurality of receiver devices (50), each one associated with a user (2), and a plurality of transmitting devices (40), each on configured to receive a respective audio signal and transmit it to one or more receiver devices (50), an electronic device (10) for the transmission of two or more signals, and an audio mixing unit (30), configured to receive said two or more signals, and to transmit each signal to a respective transmitting device (40).

## Description

The present invention relates to a system and method for simultaneous translation in guided tours.

### Field of invention

In particular, the present invention relates to audio communication systems, and more specifically to a system, method, and device for the simultaneous transmission and translation of audio signals for guided tours.

In the following, the description will focus on translating the words of a guide, but it is clear that it should not be considered limited to this specific use.

### Prior art

Guided tours are an important component of the tourism and cultural sector, allowing groups of visitors to explore places of historical, artistic, or naturalistic interest with the support of an expert guide.

Traditionally, tour guides use their voices to communicate information to participants. However, with the rise of international tourism, the need to provide content in multiple languages to meet the needs of multilingual groups has arisen.

Other limitations currently present include the difficulty of finding professional guides in certain languages and the difficulty for tour operators in optimizing the groups they organize.

In fact, the current impossibility of creating "multilingual" groups often makes it difficult to organize tours with the desired number of people.

To address this challenge, radio transmission systems for guided tours have been developed. These systems typically involve a central device connected to the guide that broadcasts pre-recorded content over multiple channels. However, these solutions have some limitations. Specifically, they do not allow direct interaction between the guide and participants, reducing the flexibility and customization of the experience.

An alternative approach relies on participants' personal mobile devices, such as smartphones, to provide automatic translations of the guide's content. While this solution offers greater flexibility, many visitors are reluctant to use their own devices during guided tours.

In fact, this solution has some disadvantages because it necessarily requires users to use their smartphones during guided tours, consuming battery power and risking their smartphones being dropped, damaged, or stolen.

Furthermore, using the systems described, if the user were to find himself in a foreign country, s/he could incur costs due to connecting to foreign internet networks.

It has been understood that a simultaneous translation system for guided tours is needed that overcomes one or more of these problems.

### Purpose of the invention

In light of the above, it is therefore the purpose of the present invention to provide a simultaneous translation system for guided tours that overcomes the limitations of traditional systems based on pre-recorded content and allows direct interaction between the guide and the participants.

Another aim of the invention is to offer a dedicated solution that does not require the use of participants' personal devices, avoiding visitors having to use their smartphones.

The present invention also aims to reduce the latency in transmitting the guide's voice to users, ensuring smoother and more immediate communication.

Another purpose of the invention is to offer a solution that simplifies the management of technological tools for tour guides who may not necessarily be familiar with technology.

In light of the above, it is therefore the scope of the present invention to integrate hardware and software into a complete solution for simultaneous translation, offering a robust and reliable platform for managing translations in real time.

Another purpose of the invention is to support simultaneous translation into multiple languages, for example, into eight different languages, making it possible to meet the needs of multilingual tourist groups.

It is also the purpose of the present invention to provide a simultaneous translation system for guided tours that includes devices that can be easily associated and connected to the guide's smartphone.

A further object of the present invention is to provide the tools necessary to carry out the method and the apparatus that carries out this method.

### Object of the invention

It is, therefore, specific object of the present invention an audio signal transmission system, comprising: a plurality of receiver devices, each one associated with a user; and a plurality of transmitting devices, each on configured to receive a respective audio signal and transmit it to one or more receiver devices; characterized in that it comprises an electronic device for the transmission of two or more signals; and in that it comprises an audio mixing unit, configured to receive said two or more signals, and to transmit each signal to a respective transmitting device.

Always according to the invention, said electronic device may be a smartphone.

Still according to the invention, said two or more signals may each transmit an audio track, and each audio track may be in a different language.

Advantageously, according to the invention, said system may comprise a central control unit, bidirectionally connected to said electronic device, and configured to: receiving a respective signal with voice content; translating said signal with voice content into two or more languages; and transmitting two or more signals, each having audio content in a respective language.

Furter according to the invention, said mixing unit may be connected to said electronic device by means of a wired connection, such as a cable with a USB-type connector.

Preferably according to the invention, said one or more transmitting devices may be connected to respective receiver devices by means of a radio connection configured on specific transmission IDs.

Always according to the invention, said electronic device may comprise a computer program to manage communication with said central control unit.

It is further object of the present invention a transmission method by means of a transmission system according to any one of the preceding claims, wherein the audio mixing device performs the steps of: receiving two or more audio content signals from an electronic device; demultiplexing said audio content signals into a plurality of distinct transmission channels; and transmitting, via each transmission channel, a respective audio content signal to a respective transmitting device.

Always according to the invention, said one or more transmitting devices may carry out a step of: transmitting by means of each transmitting device a respective audio content signal to one or more receiver devices.

Still according to the invention, said method may comprise the further step of: translating an audio signal into two or more languages by means of the central control unit.

### Brief description of the figures

The present invention will be now described, for illustrative but not limitative purposes, according to its preferred embodiments, with particular reference to the figures of the enclosed drawings, wherein:
figure 1 illustrates a block diagram of a transmission system for audio signals, according to aspects of the present disclosure;
figure 2 illustrates a further embodiment of the transmission system for audio signals, according to the invention; and
figure 3 illustrates a flowchart of a method for transmitting audio signals, according to one embodiment.

### Detailed description

In the various figures, similar parts will be indicated with the same reference numbers.

This description concerns an audio communication system for guided tours that provides simultaneous translation into several languages.

The system comprises an electronic device 10, such as a smartphone, that can be used to transmit one or more audio signals. These audio signals are received by an audio mixer.

The audio mixer unit may be connected to the electronic device via a USB cable connection.

The audio mixer unit is configured to receive two or more audio signals and transmit each signal to a respective transmitter device.

Transmitter devices are configured to receive audio signals from the audio mixer and transmit them to one or more receiver devices.

In some cases, the transmitting devices may be connected to their respective receiving devices via a radio link configured to specific broadcast IDs.

The system may also comprise a central control unit bidirectionally connected to the electronic device. The central control unit is configured to receive a signal containing voice content, translate the voice signal into two or more languages, and transmit two or more signals, each containing audio content in a respective language.

In this way, the system can provide a solution for simultaneous translation during guided tours, overcoming the limitations of existing solutions and improving the participant experience.

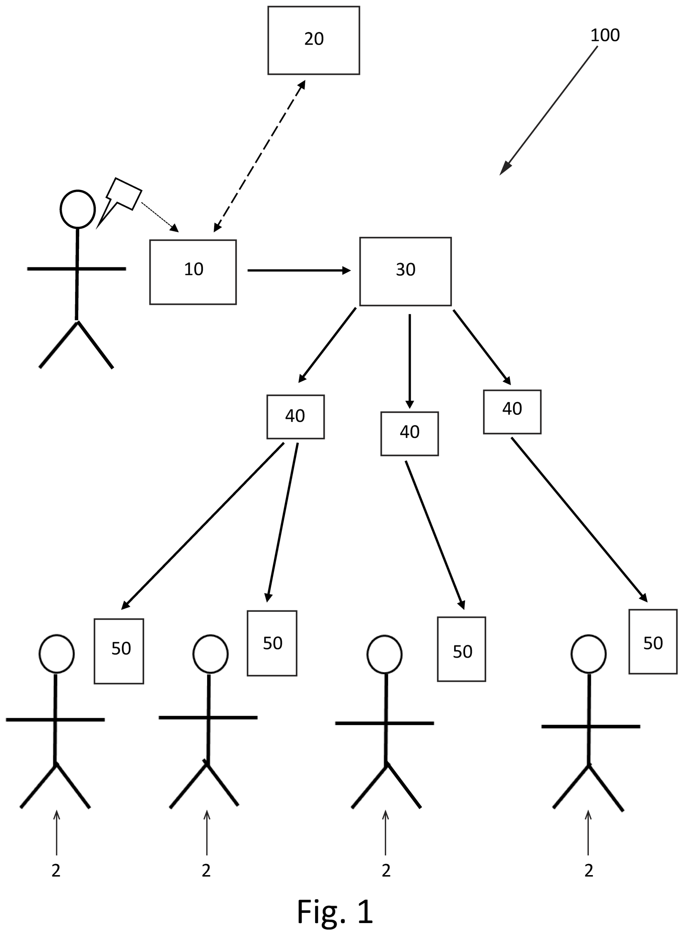

Referring to figure 1, a transmission system 100 is shown, which comprises an electronic device 10 for transmitting two or more signals. In some cases, the electronic device 10 is a smartphone or tablet.

The transmission system 100 also comprises an audio mixing unit 30. Said audio mixing unit 30 is configured to receive the two or more signals from the electronic device 10 and to transmit each signal to a respective transmitting device 40.

In particular, the audio mixing unit may be connected to the electronic device 10 and to one or more transmitting devices 40 via wireless or wired connections.

In a particular embodiment, the connection between mixing unit 30 and transmitting devices 40 occurs through physical means such as cables with 3.5 mm audio jacks.

The transmission system 100 comprises a plurality of transmitting devices 40. Each transmitter device 40 is configured to receive a respective audio signal from the audio mixing unit 30 and to transmit it to one or more receiver devices 50.

In a preferred embodiment, the transmitting devices 40 may be connected to the respective receiving devices 50 via a radio link configured to specific broadcast IDs.

The transmission system 100 also comprises a plurality of receiving devices 50. Each receiving device 50 is associated with a user 2. In this way, audio signals can be transmitted from the guide 1 to the users 2 via the transmission system 100.

The two or more signals transmitted by the electronic device 10 may each transmit an audio track. In some cases, each audio track is in a different language. This can allow users 2 to hear the guide's voice in a language they are familiar with, enhancing the guided tour experience.

For example, an end user 2 can select the audio channel number corresponding to the desired language via a touchscreen keyboard or buttons.

In a particular embodiment of the invention, channel one corresponds to the Italian language, channel two corresponds to the English language, channel three corresponds to the French language, channel four corresponds to the German language, etc.

The end user 2 is therefore equipped with a passive receiving device 50 capable of receiving a signal from the device 30 but not capable of transmitting a signal itself.

Referring to figure 1, the transmission system 100 also includes a central control unit 20.

The central control unit 20 is bidirectionally connected to the electronic device 10. This bidirectional connection allows the electronic device 10 and the central control unit 20 to communicate with each other, allowing signals to be sent from the electronic device 10 to the central control unit 20 and vice versa.

The central control unit 20 is configured to receive a signal with voice content from the electronic device 10.

In a preferred embodiment, the voice signal received by the central control unit 20 corresponds to the voice of the guide 1 recorded through sensors or audio detection means present in the electronic device 10.

If the electronic device 10 is a smartphone, the voice of the guide 1 will be recorded by the microphones integrated into the smartphone.

Once the voice signal is received, the central control unit 20 translates the voice signal into two or more languages. This translation may be achieved, for example, using a machine translation algorithm or artificial intelligence.

After translation, the central control unit 20 transmits two or more signals, each with audio content in a respective language, to the electronic device 10.

These signals transmitted by the control unit 20 correspond to the different translations of the content of the voice signal emitted by the guide 1.

In particular embodiments, the central control unit 20 performs a speech-to-text conversion of the received speech signal, a text translation of the converted text into two or more languages (text-to-text), and a text-to-speech conversion of the translated text to generate the two or more signals with audio content in the respective languages.
In one embodiment of the invention, the text-to-text translation is performed by artificial intelligence.

This integrated workflow enables simultaneous, real-time translation of the guide's voice signal 1.

The electronic device 10 may comprise a computer program configured to manage communication with the central control unit 20.

In a preferred embodiment, the computer program is a software application, such as Vox Connect, which can be installed on the electronic device 10.

The computer program can enable low-latency live audio streaming for tour guides and can use an advanced algorithm to reduce the latency of the tour guide's voice being transmitted to tour participants' smartphones.

Still referring to figure 1, the audio mixing unit 30 receives two or more signals with audio content from the electronic device 10. These signals may be generated by the electronic device 10 in response to receiving voice signals from the guide 1.

In further embodiments, the signals may be audio tracks recorded in different languages, to allow users 2 to listen to the guide 1 in a language they are familiar with.

Advantageously, the recorded audio tracks can be saved in a memory of the electronic device 10, selected by the guide 1 and transmitted to the end users 2.

Advantageously, the use of recorded audio tracks is particularly effective in the case where a guided tour must take place in places where there is no internet connection or where it is not possible to carry out real-time communication between the electronic device 10 and the central control unit 20.

The audio mixing unit 30 is connected to the electronic device 10 via a USB cable connection. This connection allows the transmission of audio signals from the electronic device 10 to the audio mixing unit 30.

Advantageously, the USB cable connection provides a stable and reliable connection for transmitting audio signals.

After receiving the audio signals from the electronic device 10, the audio mixing unit 30 transmits, via different transmission channels, a respective signal with audio content to a respective transmitting device 40.

In a preferred embodiment, the channels are transmitted in monophonic format (MONO).

Advantageously, the signals sent by the electronic device 10 and received by the audio mixing unit 30 may be digital signals.

Each transmitter device 40 is configured to receive the audio signal from the audio mixing unit 30 and transmit it to one or more receiver devices 50.

In some cases, the transmitting devices 40 may be connected to the respective receiving devices 50 via a radio link configured with specific broadcast IDs. This may allow the transmission of distinct audio signals to different receiving devices 50, allowing users 2 to receive the voice of the guide 1 in a language they are familiar with.

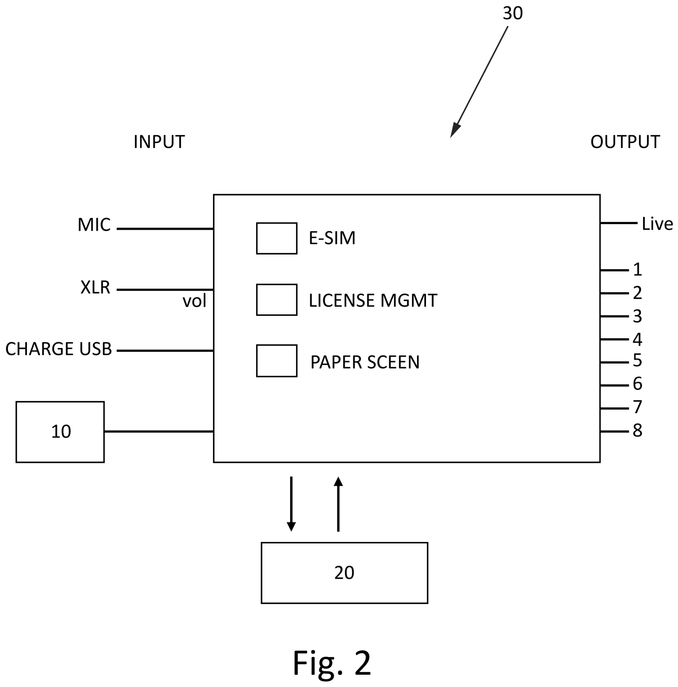

With reference to figure 2, a further embodiment of the system for simultaneous translation in guided tours according to the invention is illustrated.

In particular, figure 2 illustrates a further embodiment of the audio mixing unit 30, which can have the following input and outputs:
- a USB port for charging the audio mixing unit 30;
- a USB port for connecting to an electronic device 10;
- an input for connecting a microphone or audio recording device, for example via a 3.5mm jack;
- an XLR input for connecting electronic devices and/or transmitting audio signals;
- an input to allow volume adjustment and mute.

Preferably, in the embodiment of figure 2, the audio mixing unit 30 comprises an e-sim, one or more license management and a paper screen, in which the battery status, the signal of the electronic device 10, the volume of the audio signals, the language settings, etc. can be displayed.

Advantageously, the mixing unit 30, in addition to transmitting signals through a plurality of channels as previously described, also has an output for the real-time transmission of one or more audio signals.

In a particular embodiment of the invention, the mixing unit 30 may have a battery life of at least sixteen hours.

Advantageously, the mixing unit 30 can also communicate bidirectionally with the central control unit 20.

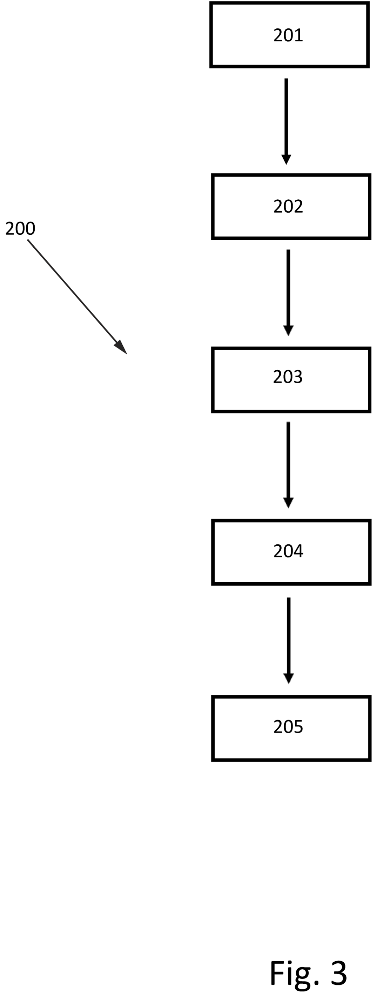

Referring to figure 3, the method 200 comprises a series of steps for receiving, processing, and transmitting audio signals by the simultaneous interpretation system for guided tours.

In particular, the method 200 features a first step 201, wherein the audio mixing unit 30 receives two or more signals with audio content from the electronic device 10. These signals may be generated by the electronic device 10 in response to receiving voice signals corresponding to the voice of the guide 1.

After the step 201, the audio mixing unit 30 performs the demultiplexing step 203, in which it demultiplexes the audio content signals into a plurality of distinct transmission channels.

Preferably, the demultiplexing step is performed using a demultiplexing algorithm that separates the audio signals based on their language or other criteria. In this way, each audio signal, corresponding to a respective translation language, can be transmitted on a separate transmission channel, allowing the transmission of distinct audio signals to different receiving devices 50.

In the transmission step 204, the audio mixing unit 30 transmits, via each transmission channel, a respective signal with audio content to a respective transmitting device 40.

Each transmitter device 40 is configured to receive the audio signal from the audio mixing unit 30 and transmit it to one or more receiver devices 50.

In some embodiments, the transmission system 100 comprises advanced features to enhance the guided tour experience. For example, the transmission system 100 may use an algorithm to reduce the latency of guide 1's voice transmitted to the tour participants' smartphones. This may allow for smoother and more immediate communication between guide 1 and users 2, improving interaction and engagement during the guided tour.

With reference to figure 2, following step 204, the method according to the invention presents a further step 205, in which the transmitting devices 40 transmit the signal with audio content to one or more receiving devices 50 associated with the users 2.

In the embodiment in which the system 100 is to perform a simultaneous multilingual translation of the words of the guide 1, the method 200 provides a translation step 202, in which the central processing unit 20 translates the audio signal transmitted by the electronic device 10.

Advantageously, in step 202 the words of guide 1 are translated in real time and into two or more languages.

Still referring to figure 3, step 202 is performed after step 201 and before step 203.

### Advantages

An advantage of the present invention is that it provides a simultaneous translation system for guided tours that overcomes the limitations of traditional systems based on pre-recorded content. This system allows for direct interaction between the guide and participants, significantly enhancing the overall tour experience.

Another advantage of this invention is that it offers a dedicated solution that does not require the use of participants' smartphones, avoiding potential distractions, compatibility issues, and battery drain.

An advantage of the present invention is that it integrates hardware and software into a complete solution for real-time multilingual translation. Advantageously, the system that is the object of the invention can be used with real-time translations (live translation mode) and/or with pre-recorded translations (pre-recorder translation mode).
Unlike similar devices described in the prior art that allow the translation and transmission of only one language at a time, the system according to the invention allows real-time translation and transmission of a plurality of languages simultaneously.

Aspects of any example described above can be combined with aspects of any other example described to form further examples without losing the intended effect.

It should be understood that the above description of a preferred embodiment is provided by way of example only and that various modifications may be made by those skilled in the art. Naturally, it is not possible to describe every conceivable modification and alteration of the devices or methods described above for the purposes of describing the aforementioned aspects, but one skilled in the art will recognize that many further modifications and permutations of various aspects are possible.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Audio signal transmission system (100), comprising:
a plurality of receiver devices (50), each one associated with a user (2); and
a plurality of transmitting devices (40), each on configured to receive a respective audio signal and transmit it to one or more receiver devices (50);
**characterized**
**in that** it comprises an electronic device (10) for the transmission of two or more signals; and
**in that** it comprises an audio mixing unit (30), configured to receive said two or more signals, and to transmit each signal to a respective transmitting device (40).

2. Transmission system (100) according to claim 1, **characterized in that** said electronic device (10) is a smartphone.

3. Transmission system (100) according to any one of the preceding claims, **characterized**
**in that** said two or more signals each transmit an audio track, and
**in that** each audio track is in a different language.

4. Transmission system (100) according to any one of the preceding claims, **characterized in that** it comprises a central control unit (20),
bidirectionally connected to said electronic device (10), and
configured to:
- receiving a respective signal with voice content;
- translating said signal with voice content into two or more languages; and
- transmitting two or more signals, each having audio content in a respective language.

5. Transmission system (100) according to any one of the preceding claims, **characterized in that** said mixing unit (30) is connected to said electronic device (10) by means of a wired connection, such as a cable with a USB-type connector.

6. Transmission system (100) according to any one of the preceding claims, **characterized in that** said one or more transmitting devices (40) are connected to respective receiver devices (50) by means of a radio connection configured on specific transmission IDs.

7. Transmission system (100) according to any one of the preceding claims, **characterized in that** said electronic device (10) comprises a computer program to manage communication with said central control unit (20).

8. Transmission method (200) by means of a transmission system (100) according to any one of the preceding claims, wherein the audio mixing device (30) performs the steps of:
- receiving (201) two or more audio content signals from an electronic device (10);
- demultiplexing (203) said audio content signals into a plurality of distinct transmission channels; and
- transmitting (204), via each transmission channel, a respective audio content signal to a respective transmitting device (40).

9. Transmission method (200) according to claim 8, **characterized in that** said one or more transmitting devices carry out a step of:
- transmitting (205) by means of each transmitting device (40) a respective audio content signal to one or more receiver devices (50).

10. Transmission method (200) according to any one of claims 8 or 9, **characterized in that** it comprises the further step of:
- translating (202) an audio signal into two or more languages by means of the central control unit (20).
